# EUROPÄISCHE PATENTSCHRIFT

(11) **EP 1 491 644 B1**
(45) Veröffentlichungstag und Bekanntmachung des Hinweises auf die Patenterteilung: **16.08.2006**
(21) Anmeldenummer: 04012963.7
(22) Anmeldetag: 02.06.2004
(51) Int. Cl.: C22B 21/00, C22B 7/00, F27B 3/04, F27B 3/06

(54) **Verfahren und Vorrichtung zum Trennen von in Aluminiumlegierungen enthaltenen Eisenwerkstoffteilen**
Process and apparatus for the separation of ferrous parts from aluminium alloys
Procédé et dispositif pour la séparation de parties ferreuses d'alliages d'aluminium

(30) Priorität: 26.06.2003 DE 10328903
(43) Veröffentlichungstag der Anmeldung: 29.12.2004
(73) Patentinhaber: Honsel GmbH & Co. KG, 59872 Meschede (DE)
(72) Erfinder: Pithan, Ansgar, 59872 Meschede (DE)
(74) Vertreter: Rehders, Jochen

(56) Entgegenhaltungen:
- FR-A- 2 453 375
- GB-A- 2 216 640
- US-A- 3 550 925
- US-A- 4 824 364

## Beschreibung

Die Erfindung betrifft ein Verfahren und eine Vorrichtung zum Trennen von in Aluminiumlegierungen enthaltenen Eisenwerkstoffteilen durch Abschmelzen der Aluminiumlegierung.

Werkstücke aus Aluminiumlegierungen, insbesondere Gußstücke, werden, je nach ihrem Verwendungszweck, häufig mit Komponenten aus Eisenwerkstoffen bestückt. Dabei handelt es sich beispielsweise um Stehbolzen, Lagerdeckel, Lagerbrücken und Zylinderlaufbuchsen in Zylinderblöcken. Um die Aluminiumlegierungen zurückgewinnen zu können, wenn die Werkstücke Ausschuß sind oder am Ende ihrer Lebensdauer angelangt sind, müssen die Aluminiumlegierungen und die Komponenten aus Eisenwerkstoffen getrennt werden. Dies ist durch eine Kaltaufbereitung, beispielsweise Schreddern und anschließendes Trennen in einem Magnetabscheider möglich. Ebenso ist es möglich, ein Trennen durch Ausnutzung der unterschiedlichen Schmelzpunkte der Aluminiumlegierung und der Eisenwerkstoffe im warmen Zustand durchzuführen. Ein Trennen durch Demontage ist demgegenüber sehr kostenintensiv und häufig gar nicht möglich.

Für das Abschmelzen von in Eisenwerkstoffteilen enthaltenen Aluminiumlegierungen ist es aus der FR-A-2453375 bekannt, einen kippbaren Zweikammerofen zu verwenden, der aus einem Schmelz- und einem daneben angeordneten Warmhalteteil besteht. Das Einsatzgut wird durch eine seitliche Tür auf den Ofenboden der ersten Kammer chargiert. Durch geeignete Beheizungen schmilzt die Aluminiumlegierung und fließt durch eine Öffnung in die zweite Kammer, während die Eisenwerkstoffteile auf den Ofenboden der ersten Kammer zurückbleiben. Diese zurückbleibenden Eisenwerkstoffteile werden von Zeit zu Zeit durch Kippen des Zweikammerofens durch die seitliche Tür der ersten Kammer entfernt. Mit diesem bekannten Zweikammerofen lässt sich nicht vermeiden, dass kleinere Eisenwerkstoffteile durch die Öffnung hindurch in die Warmhaltekammer gelangen, wo sie sich in unerwünschter Weise mit der geschmolzenen Aluminiumlegierung legieren. Das Trennen von in Aluminiumlegierungen enthaltenen Eisenwerkstoffteilen mittels des bekannten Zweikammerofens erfordert einen hohen Energieverbrauch wegen fehlender Ausnutzung der Schmelzwärme zum Vorwärmen des Einsatzguts, ergibt einen hohen Abbrand der Aluminiumlegierung wegen der langen Verweilzeit in der zweiten Kammer, Wärmeverlust beim Entfernen der Eisenwerkstoffteile durch die seitliche Tür der ersten Kammer und ergibt den schon erwähnten Eintrag von Eisenwerkstoffteilen in die Aluminiumlegierungsschmelze und eine damit verbundene Verschlechterung der mechanischen Eigenschaften der Aluminiumlegierung

Der Erfindung liegt die Aufgabe zugrunde, ein Verfahren und eine Vorrichtung zum Trennen von in Aluminiumlegierungen enthaltenen Eisenwerkstoffteilen durch Abschmelzen der Aluminiumlegierung zu schaffen, die mit einem möglichst geringen Energieverbrauch und geringem Abbrand verbunden ist, das Entfernen der Eisenwerkstoffteile auf einfache Weise gestattet und ein übermäßiges Einlegieren des Eisenwerkstoffs in die Aluminiumlegierung vermeidet.

Ausgehend von dieser Aufgabenstellung wird die Verwendung eines kippbaren Einkammerschachtofens zum Trennen von in Aluminiumlegierungen enthaltenen Eisenwerkstoffteilen durch Abschmelzen der Aluminiumlegierung aus
- einem im Wesentlichen senkrechten Beschickungsschacht, in den Einsatzgut chargenweise mittels einer darüber angeordneten Chargiervorrichtung eingebracht wird,
- einer gegenüber dem Beschickungsschacht im Wesentlichen waagerechten, rinnenförmig gestalteten Schmelzgutkammer, auf deren Ofenboden die Aluminiumlegierung durch Erwärmen auf eine Temperatur unterhalb der Schmelztemperatur der Eisenwerkstoffteile mittels einer Heizvorrichtung in der Schmelzgutkammer erschmolzen wird,
- einer am tiefsten Punkt der Schmelzgutkammer seitlich angeordneten Abstichöffnungdurch die die geschmolzene Aluminiumlegierung sofort und kontinuierlich abgestochen wird und
- einer an dem Beschickungsschacht abgewandeten Ende der Schmelzgutkammer angeordneten Reinigungstür, durch die die Eisenwerkstoffteile nach vollständigem Auslaufen der Aluminiumlegierung durch Kippen des Einkammerschachtofens in Richtung der Reinigungstür mittels einer Kippvorrichtung entfernt werden, vorgeschlagen.

Mit der erfindungsgemäßen Verwendung des Schmelzofens ist ein geringer Energieverbrauch verbunden, da das Einsatzgut im Beschickungsschacht vorgewärmt wird. Das Einlegieren des Eisenwerkstoffs in die Aluminiumlegierungsschmelze lässt sich auf ein Minimum reduzieren, da die Aluminiumlegierung sofort und kontinuierlich abgestochen wird und nur kurzzeitig mit den Einsenwerkstoffteilen in Berührung kommt. Durch das sofortige und kontinuierliche Abstechen bei niedrigen Temperaturen tritt nur ein geringer Abbrand der Aluminiumlegierung auf. Die Eisenwerkstoffteile lassen sich durch die Reinigungstür bequem entfernen und fallen von selbst aus dem Schmelzofen heraus, wenn durch die Kippvorrichtung in Richtung der Reinigungstür gekippt wird.

Die Erfindung wird nachstehend anhand eines in der Zeichnung dargestellten Ausführungsbeispiels des näheren erläutert. In der Zeichnung zeigen:

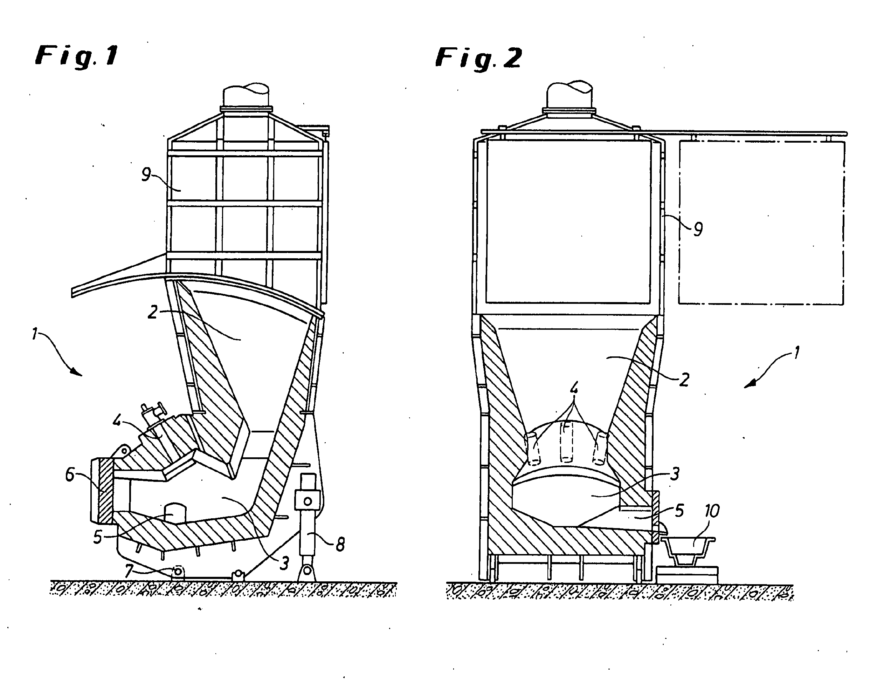

- Fig. 1: Eine Seitenansicht im Schnitt eines erfindungsgemäßen Einkammerschachtofens und
- Fig. 2: eine gegenüber der Fig. 1 um 90° gedrehte Schnittansicht des erfindungsgemäßen Einkammerschachtofens.

Ein allgemein mit der Bezugsziffer 1 bezeichneter Einkammerschachtofen weist einen im wesentlichen senkrechten Beschickungsschacht 2 und eine gegenüber dem Beschickungsschacht 2 im wesentlichen waagerechte Schmelzgutkammer 3 auf. An der Decke der Schmelzgutkammer 3 ist eine Heizvorrichtung 4 in Form von Brennern angeordnet. Eine elektrische Heizung ist ebenfalls möglich. Am tiefsten Punkt der Schmelzgutkammer 3 ist eine Abstichöffnung 5 seitlich angeordnet, während sich am vorderen Ende der Schmelzgutkammer 3 eine Reinigungstür 6 befindet.

Der Beschickungsschacht 2 wird über eine darüber angeordnete Chargiervorrichtung 9 chargenweise mit Einsatzgut beschickt. Mittels der Brenner 4 wird das in die Schmelzgutkammer 3 gelangte Einsatzgut auf eine Temperatur unterhalb der Schmelztemperatur der Eisenwerkstoffieile erwärmt, so daß nur die Aluminiumlegierung schmilzt und sofort und kontinuierlich durch die Abstichöffnung 5 abgestochen wird. Die Aluminiumlegierungsschmelze fließt durch die Abstichöffnung 5 beispielsweise in eine Pfanne 10 oder in eine Form. Das in den Beschickungsschacht 2 eingebrachte Einsatzgut sinkt nach und nach in die Schmelzgutkammer 3 und wird dabei bereits auf die Schmelztemperatur des Aluminiums vorgewärmt. Wenn die Aluminiumlegierung aus einer oder mehreren Chargen von Einsatzgut abgeschmolzen und abgestochen ist und sich die Eisenwerkstoffteile in der Schmelzgutkammer 3 angesammelt haben, wird die Reinigungstür 6 geöffnet und der Einkammerschachtofen 1 mittels einer Kippvorrichtung in Form einer Hydraulik-Kolben-Zylinder-Einheit 8 um ein Kippgelenk 7 gekippt, so daß die Eisenwerkstoffteile aus dem Einkammerschachtofen 1 herausfallen oder sich manuell auf einfache Art und Weise entfernen lassen.

Da die Verweilzeit der Aluminiumlegierungsschmelze in der Schmelzgutkammer 3 gering ist, ist auch die Zeitdauer des Kontakts mit den Eisenwerkstoffteilen gering, so daß davon nur wenig in die Aluminiumlegierungsschmelze einlegiert wird, so daß eine Aluminiumlegierung mit im wesentlichen den ursprünglichen Eigenschaften, frei von Eisenwerkstosteilen, wieder gewonnen wird.

## Patentansprüche

1. Verwendung eines kippbaren Einkammerschachtofens (1) zum Trennen von in Aluminiumlegierungen enthaltenen Eisenwerkstoffteilen durch Abschmelzen der Alumniumlegierung aus
- einem im Wesentlichen senkrechten Beschickungsschacht (2), in den Einsatzgut chargenweise mittels einer darüber angeordneten Chargiervorrichtung (9) eingebracht wird,
- einer gegenüber dem Beschickungsschacht (2) im Wesentlichen waagerechten, rinnenförmig gestalteten Schmelzgutkammer (3), auf deren Ofenboden die Aluminiumlegierung durch Erwärmen auf eine Temperatur unterhalb der Schmelztemperatur der Eisenwerkstoffteile mittels einer Heizvorrichtung (4) in der Schmelzgutkammer (3) erschmolzen wird,
- einer am tiefsten Punkt der Schmelzgutkammer (3) seitlich angeordneten Abstichöffnung (5), durch die die geschmolzene Aluminiumlegierung sofort und kontinuierlich abgestochen wird und
- einer an dem Beschickungsschacht (2) abgewandeten Ende der Schmelzgutkammer (3) angeordneten Reinigungstür (6), durch die die Eisenwerkstoffteile nach vollständigem Auslaufen der Aluminiumlegierung durch Kippen des Einkammerschachtofens (1) in Richtung der Reinigungstür (6) mittels einer Kippvorrichtung (8) entfernt werden.

## Claims

1. Use of a pivotable shaft furnace (1) having a single chamber for the separation of ferrous parts from aluminium alloys by smelting the aluminium alloy, comprising
- an essentially vertical charging shaft (2), into which charges are introduced in batches by means of a feeding device (9), arranged above said charging shaft (2),
- a trough shaped smelting chamber (3) for receiving the melted mass, arranged essentially horizontally in regard to the charging shaft (2), on the bottom of which the aluminium alloy is smelted by heating to a temperature below the melting point of the ferrous parts by means of a heating device (4) in the smelting chamber (3),
- a tap hole (5) arranged laterally at the lowermost point of the smelting chamber (3), through which the molten aluminium alloy is tapped immediately and continuously and
- a discharge port (6) arranged at the end of the smelting chamber (3), opposite to the charging shaft (2), through which the ferrous parts are evacuated after complete flow out of the aluminium alloy, by pivoting the shaft furnace (1) in the direction of the discharge port (6) by means of a pivoting mechanism (8).

## Revendications

1. Utilisation d'un four à cuve unique (1) pivotable pour séparer des déchets ferreux contenus dans des alliages d'aluminium par fusion de l'alliage d'aluminium comprenant
- une cuve de chargement (2) essentiellement verticale, dans laquelle le matériel de chargement est introduit par lots au moyen d'un dispositif de chargement (9) disposé au dessus de la cuve de chargement (2),
- un compartiment de fusion (3) pour recevoir la masse fondue, disposé essentiellement horizontalement par rapport à la cuve de chargement (2) et conformé en rigole, l'alliage d'aluminium étant fait fondre sur le sol dudit compartiment de fusion (3) par échauffement à une température en dessous de la température de fusion des déchets ferreux au moyen d'un dispositif de chauffage (4),
- un trou de coulée (5) disposé latéralement au point le plus bas du compartiment de fusion (3), à travers lequel l'écoulement de l'alliage d'aluminium s'effectue immédiatement et en continu et
- une porte de décharge (6), disposée au bout du compartiment de fusion (3) à l'opposé de la cuve de chargement (2), à travers laquelle les déchets ferreux sont déchargés après la vidange complète de l'alliage d'aluminium, en pivotant le four à cuve unique (1) en direction de la porte de déchargement (6) au moyen d'un dispositif de pivotement (8).
